# EUROPÄISCHE PATENTANMELDUNG

(11) **EP 0 749 823 A1**
(43) Veröffentlichungstag der Anmeldung: **27.12.1996**
(21) Anmeldenummer: 96107244.4
(22) Anmeldetag: 08.05.1996
(51) Int. Cl.: B29C 47/34, B65H 23/32, B65H 23/00

(54) **Abzugsvorrichtung**

(30) Priorität: 20.06.1995 DE 19522318
(71) Anmelder: Windmöller & Hölscher, D-49525 Lengerich (DE)
(72) Erfinder: Sensen, Klemens, 49525 Lengerich (DE); Linkies, Jürgen, 49536 Lienen (DE); Krause, Ulrich, 49536 Lienen (DE)

(57) **Zusammenfassung**

Die Erfindung betrifft eine Abzugsvorrichtung für eine im Blasverfahren von einem Extruder hergestellte Kunststoff-Schlauchfolie. Um eine Mittelfaltenbildung beim Abziehen der Kunststoff-Schlauchfolie zu verhindern, weist mindestens eine Umlenkwalze (10) auf ihrer Oberfläche spiralförmige Nuten (16,18) auf.

## Beschreibung

Die Erfindung betrifft eine Abzugsvorrichtung für eine im Blasverfahren von einem Extruder hergestellte Kunststoff-Schlauchfolie und insbesondere die Ausgestaltung der in dieser vorgesehenen mindestens einen Umlenkwalze und/oder Wendestange.

Eine Abzugsvorrichtung für Kunststoff-Schlauchfolien ist beispielsweise aus der EP 0 191 114 B1 bekannt. Nach Flachlegen der aus dem Blaskopf eines Extruders austretenden Kunststoff-Schlauchfolie wird diese über Wendestangen und Umlenkwalzen, die in der Regel reversierend angeordnet sind, geführt.

Nach dem Stand der Technik wurden die Wendestangen häufig derart ausgeführt, daß sie mit Preßluft beströmbar sind, die durch über den Mantel der Wendestangen verteilte Bohrungen austreten kann, damit dann zwischen der Oberfläche der Wendestange und der über diese abgezogenen Kunststoff-Schlauchfolie ein Luftpolster gebildet wird. Insbesondere bei der Verarbeitung von haftenden bis klebenden Folien ist es besonders wünschenswert, mit großen Luftpolstern zu fahren, da dann die über die Wendestange geführte Folie auf der gesamten Breite der Wendestange schwimmt.

An reversierenden Abzügen mit Luftwendestangen tritt aber bei hohen Luftpolstern in der Mitte der Bahn eine Mittelfalte auf. Diese Mittelfalte verhindert ein einwandfreies Aufwickeln der Kunststoff-Schlauchfolie. In der Praxis wird daher mit weniger großen Luftpolstern gefahren, was zwar der Bildung von Falten im Mittelteil der Wendestange entgegenwirkt, aber gerade bei der Verarbeitung von haftenden bis klebenden Folien zu einer mehr oder weniger starken Berührung zwischen der Folie und der Wendestange führt.

Die gemäß dem Stand der Technik zylindrisch ausgeführten Wendestangen führen zu keiner Abhilfe hinsichtlich des Problems der vorgenannten Mittelfaltenbildung.

Aufgabe der Erfindung ist es nun, eine Abzugsvorrichtung für eine im Blasverfahren von einem Extruder hergestellten Kunststoff-Schlauchfolie derart weiterzubilden, daß eine störungsfreie Verarbeitung von Folien ermöglicht wird. Insbesondere ist es Aufgabe der vorliegenden Erfindung, die Bildung einer Mittelfalte bei der abgezogenen Kunststoff-Schlauchfolie zu verhindern.

Erfindungsgemäß wird diese Aufgabe ausgehend von einer an sich bekannten Abzugsvorrichtung für eine im Blasverfahren von einem Extruder hergestellten Kunststoff-Schlauchfolie dadurch gelöst, daß die mindestens eine Umlenkwalze auf ihrer Oberfläche spiralförmige Nuten aufweist. Dabei ist es vorteilhaft, wenn die spiralförmigen Nuten bereichsweise entgegengesetzte Steigung aufweisen. Die Bereiche mit entgegengesetzter Steigung können jeweils zwei Hälften der Umlenkwalze entsprechen. Die Umlenkwalze mit den auf ihrer Oberfläche ausgebildeten spiralförmigen Nuten kann vorteilhaft als spiralförmig genutete Gummiwalze ausgebildet sein.

Zusätzlich kann die mindestens eine Umlenkwalze über ihre Länge einen unterschiedlichen Durchmesser aufweisen. Insbesondere kann die Oberfläche der Umlenkwalze über ihre Länge gesehen konkav ausgebildet sein. Dagegen kann mindestens eine Wendestange vorteilhaft auch ballig ausgeführt sein.

Weitere Einzelheiten und Vorteile der Erfindung werden anhand eines in der Zeichnung dargestellten Ausführungsbeispieles näher erläutert. Es zeigen:
- Fig. 1:: Eine Abzugsvorrichtung in perspektivischer Ansicht in einer ersten Arbeitsstellung,
- Fig. 2:: eine Abzugsvorrichtung in perspektivischer Ansicht in einer zweiten Arbeitsstelllung und
- Fig. 3:: eine Umlenkwalze gemäß einer Ausführungsform der vorliegenden Erfindung, an beiden Enden geschnitten.

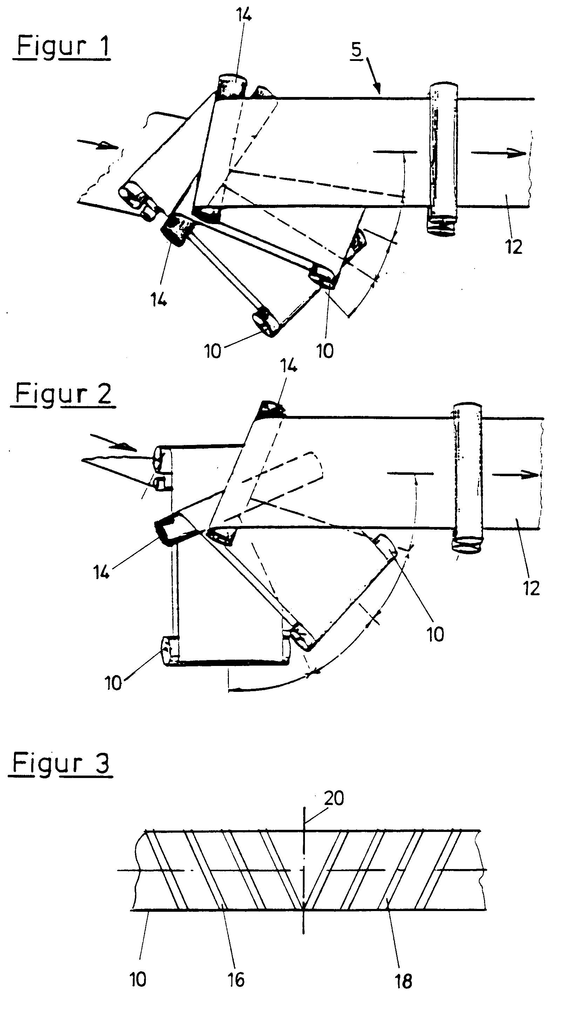

In den Figuren 1 und 2 sind reversierende Abzugsvorrichtungen 5 in verschiedenen Winkelstellungen dargestellt. Die Kunststoff-Schlauchfolie durchläuft die Abzugsvorrichtung in Pfeilrichtung. Mit 10 sind die beiden Umlenkwalzen bezeichnet. Mit 14 sind die jeweiligen Wendestangen bezeichnet.

In Fig. 3 ist eine Umlenkwalze 10 gemäß der vorliegenden Erfindung dargestellt. Sie unterscheidet sich von einer herkömmlichen Umlenkwalze dadurch, daß auf ihrer Oberfläche spiralförmige Nuten 16, 18 ausgebildet sind. Mit 20 ist eine Mittellinie bezeichnet, die die Länge der Umlenkwalze 10 in zwei gleichlange Hälften teilt. Wie aus der Fig. 3 zu ersehen ist, gehen von der Teilungslinie 20 jeweils spiralförmige Nuten aus, die eine entgegengesetzte Steigung aufweisen. Die Steigung ist so gewählt, daß die über die Umlenkwalze verlaufende Kunststoffolie nach außen gezogen wird, so daß die Mittelfaltenbildung wirksam verhindert wird. Die Nuten werden einfach dadurch gebildet, daß sie in einer Gummioberfläche der Umlenkwalze ausgenommen sind.

Die in den Figuren 1 und 2 dargestellten Umlenkwalzen können in hier nicht dargestellter Art und Weise zusätzlich konkav geformt sein. Auch hierdurch wird tendenziell die Faltenbildung im Mittelbereich der Kunststoff-Schlauchfolie wirksam verhindert.

## Patentansprüche

1. Abzugsvorrichtung für eine im Blasverfahren von einem Extruder hergestellte Kunststoff-Schlauchfolie mit mindestens einer Umlenkwalze und einer Wendestange,
**dadurch gekennzeichnet,**
daß die mindestens eine Umlenkwalze auf ihrer Oberfläche spiralförmige Nuten aufweist.

2. Abzugsvorrichtung nach Anspruch 1, dadurch gekennzeichnet, daß die mindestens eine Umlenkwalze eine spiralförmig genutete Gummioberfläche aufweist.

3. Abzugsvorrichtung nach Anspruch 1 oder 2, dadurch gekennzeichnet, daß die spiralförmige Nut über die Länge der Umlenkwalze bereichsweise eine entgegengesetzte Steigung aufweist.

4. Abzugsvorrichtung nach Anspruch 3, dadurch gekennzeichnet, daß die Umlenkwalzen über ihre Länge hin betrachtet von der Mitte ausgehend jeweils zwei Hälften aufweisen, deren Oberfläche spiralförmige Nuten mit entgegengesetzter Steigung aufweisen.

5. Abzugsvorrichtung nach einem der Ansprüche 1 bis 4, dadurch gekennzeichnet, daß mindestens eine Umlenkwalze und/oder Wendestange über ihre Länge einen unterschiedlichen Durchmesser aufweist.

6. Abzugsvorrichtung nach Anspruch 5, dadurch gekennzeichnet, daß die Oberfläche der mindestens einen Umlenkwalze und/oder Wendestange konkav ausgebildet ist.

7. Abzugsvorrichtung nach Anspruch 5 oder 6, dadurch gekennzeichnet, daß mindestens eine Wendestange ballig ausgeführt ist.
